# EUROPEAN PATENT SPECIFICATION

(11) **EP 4 637 040 B1**
(45) Date of publication and mention of the grant of the patent: **11.11.2026**
(21) Application number: 24217813.5
(22) Date of filing: 05.12.2024
(51) Int. Cl.: H04B 3/54

(54) **SYSTEM FOR MONITORING A DEVICE PLACED IN AN EXPLOSIVE ENVIRONMENT**
SYSTEM ZUR ÜBERWACHUNG EINER VORRICHTUNG IN EINER EXPLOSIONSGEFÄHRDETEN UMGEBUNG
SYSTÈME DE SURVEILLANCE D'UN DISPOSITIF PLACÉ DANS UN ENVIRONNEMENT EXPLOSIF

(30) Priority: 19.04.2024 IT 202400008950
(43) Date of publication of application: 22.10.2025
(73) Proprietor: S & h S.r.l., 20068 Peschiera Borromeo (MI) (IT)
(72) Inventor: Parravicni, Carlo, 20068 Peschiera Borromeo MI (IT); Baita, Paolo, 20068 Peschiera Borromeo MI (IT); Crivellaro, Alberto, 20068 Peschiera Borromeo MI (IT)
(74) Representative: Perani & Partners S.p.A.

(56) References cited:
- US-A1- 2018 026 677
- US-A1- 20240 082 866

## Description

### Field of application

The object of the present invention finds useful use in the field of monitoring and control of one or more devices arranged and operating in potentially explosive environments, in accordance with the preamble of claim 1.

### Technical background

Systems for controlling a device arranged in a potentially explosive environment (ATEX environment, i.e., Atmosphere Explosive) are known in the state of the art. Such systems envisage for the use of a plurality of electrical connections between the device, operating in an ATEX environment, and control and command electronics suitable for the operation of the device itself.

The electronics of the known systems are isolated from the ATEX environment, for example being arranged in a remote environment, and envisage the use of electrical connection cables configured to send power signals, and further cables configured to transmit control or configuration signals to and from the device.

### Limits of the prior art

The known systems for controlling devices in a potentially explosive environment have several limitations.

In particular, such known systems control one or more devices, having a high operating complexity. In fact, this implies the need to have a vast plurality of electrical connections, to ensure the power supply, control and monitoring of the device.

Furthermore, as previously mentioned, the control electronics are arranged in a remote environment with respect to the ATEX environment, so as to avoid possible damage in the event of explosions. Therefore, to cope with the distance between the device, operating in ATEX environment, and the control electronics, arranged in the remote environment, such a vast plurality of electrical connections must be specially sized to ensure communication between the device and the control electronics.

Furthermore, such a plurality of electrical connections, in order to work in an ATEX environment, must be suitably protected in order to comply with ATEX regulations.

Consequently, this entails a significant expense in terms of economic resources and material used to meet the device control requirements and to meet the regulations in force in an explosive risk environment.

Furthermore, the legislation requires such disconnections/ reconnections to be carried out in a safe atmosphere, for which it is necessary to stop production and significant downtime. An example of prior art can be found in documents US2018/026677 and US2024/082866.

### Object of the invention

The object of the present invention is to provide a system for controlling a device in an explosive environment capable of overcoming the limits of the prior art.

In particular, it is an object of the present invention to obtain a system able to simplify the connections between the device and the control electronics.

A further object of the present invention is to provide a system for controlling a device in an explosive environment which is alternative to the systems known in the state of the art.

Furthermore, it is an object of the present invention to obtain a Power Line communication system capable of minimizing the risk of arcing in an ATEX environment.

The technical task and the objects stated are basically achieved by a system for controlling a device in a potentially explosive atmosphere according to the present invention comprising the technical features set out in one or more of the appended claims.

### SUMMARY OF THE INVENTION

The system for monitoring a device arranged in an explosive risk environment, according to the present invention, comprises a network device configured to send/receive a digital signal and a mother Powerline module electrically connectable to an electrical network, and connected with said network device to receive said digital signal and convert it into an analogue electrical signal on said electrical network. In particular, said network device, said mother Powerline module and said electrical network are arranged in a non-ATEX environment,

The system according to the present invention further comprises a device configured to operate in an ATEX environment.

Further, the system comprises a child PowerLine module, configured to receive/transmit the analogue electrical signal from said electrical signal and convert it into a digital signal, a power supply module, configured to deliver a direct current electrical power, and a processing unit, in signal communication with the child PowerLine module and electrically connected to the power supply module.

In particular, the processing unit is configured to receive/transmit the digital signal from the child PowerLine module and generate an actuation signal for said device arranged in an ATEX environment.

Furthermore, the system comprises a command and control interface 41 electrically connected to the processing unit 33, the command and control interface 41 being configured to receive commands from a user.

In accordance with the present invention, the system comprises a casing, arranged in an ATEX environment and compliant with EN 60079 standards, having a cavity, wherein one or more of said power supply module, said child PowerLine module, said processing unit and said command and control interface are arranged in the cavity of the at least one casing.

Furthermore, the power supply module and the child Powerline module are electrically connected with said electrical network by means of a single electrical cable.

### Advantages of the invention

Advantageously, thanks to a specific embodiment, it is possible to obtain a system for controlling a device in a potentially explosive environment capable of simplifying the electrical connections between the processing unit and the device in an ATEX environment, thus limiting the number of connections to ensure a signal communication between the control electronics of the system and the device.

Still advantageously, it is possible to obtain a system for controlling a device in a potentially explosive environment capable of providing protection of the electronic devices suitable for controlling the device, allowing the latter to be arranged in a potentially explosive environment.

Finally, thanks to the present invention, it is possible to limit the number of disconnections/reconnections, consequently minimizing the risk of triggering arcing in the ATEX environment, since the system of the present invention provides a single electrical cable to electrically connect the power supply module and the child PowerLine module to the electrical network in order to receive/send the command, control data to the device operating in the ATEX environment.

### BRIEF DESCRIPTION OF THE DRAWINGS

The advantages and technical features will be amply clarified by the following detailed description of a system for controlling a device in a potentially explosive environment, according to the present invention, in accordance with a preferred embodiment, shown by way of example, in the set of drawings of which:
- Figure 1a shows a block diagram of a system for controlling a device in a potentially explosive environment, according to the present invention, in accordance with an embodiment,
- Figure 1b shows a block diagram of a system for controlling a device in a potentially explosive environment in accordance with a further embodiment,

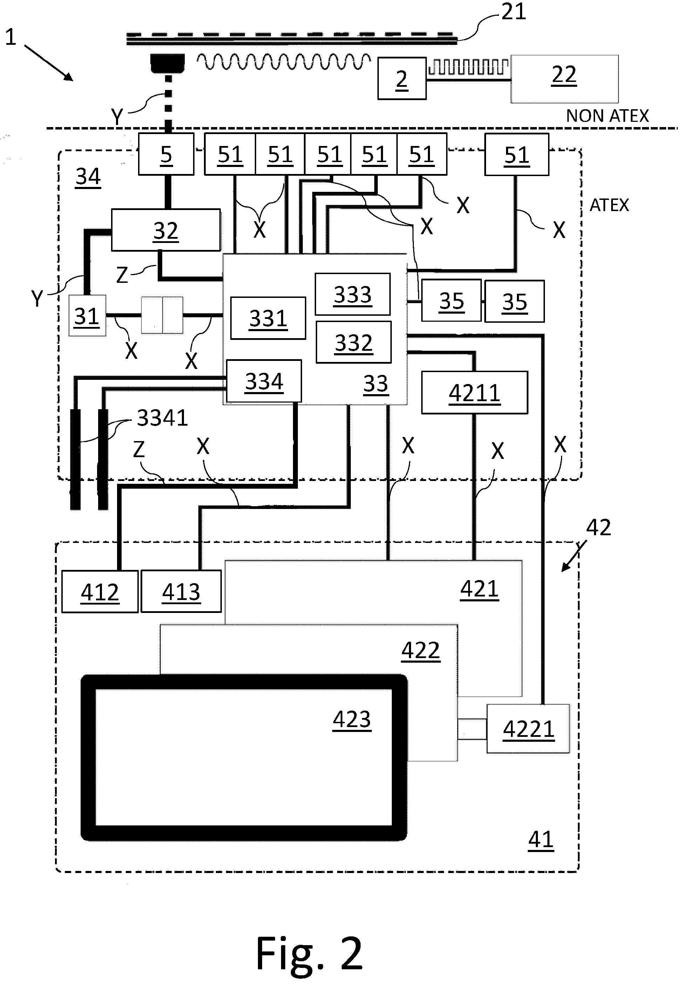

- Figure 2 shows a block diagram of the connections of a system for controlling a device in a potentially explosive environment, in accordance with an embodiment.

### DETAILED DESCRIPTION

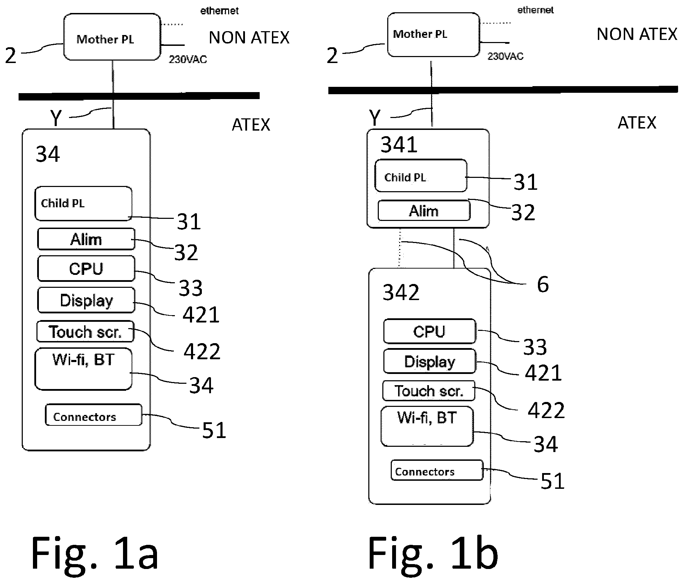

As shown in Figure 1, reference numeral 1 indicates a system 1 for monitoring a device (not shown in the figures) arranged in an explosive risk environment, hereinafter referred to as ATEX environment in the present disclosure.

The system 1, according to the present invention, comprises a network device 22, for example a network router or a switch configured to send/receive a digital signal.

The system 1 further comprises a mother PowerLine module 2, electrically connectable to an electrical network 21 and connected to the network device 22, preferably by means of an Ethernet cable. The mother PowerLine module 2 is configured to receive the digital signal from the network device 22 and convert it to an analogue electrical signal on such an electrical network 21. Preferably, the electrical network 21 has a 230V alternating current power line.

In particular, the network device 22, the mother PowerLine module 2 and the electrical network 21 are arranged in a non-ATEX environment, i.e., an external and isolated environment with respect to the ATEX environment.

This advantageously ensures that the disconnection/reconnection occurs in a non-ATEX environment, thus avoiding any risk of triggering arcing during any disconnection/reconnection operations. Furthermore, the system 1 comprises a device (not shown in the attached figures) configured to operate in an ATEX environment. By way of example, the device which is intended to actuate, and which is resident in the ATEX environment, can be a paint dispensing station.

The system 1 of the present invention comprises a child PowerLine module 31.

Such a child PowerLine module 31 is configured to receive/transmit the analogue electrical signal from the electrical network 21 and convert it into a digital signal.

It should be noted that the implementation of a PowerLine module allows the transmission of data, originating from the network device 22, using a power line as a transmission medium. In particular, the signal deriving from the network device 22 is a signal in digital format. Said signal is converted by the mother PowerLine module 2 into an analogue signal, having a higher frequency (in the order of KHz or MHz) than the alternating current distribution frequency (50Hz/60Hz). Subsequently, the analogue signal, by means of the electrical line, is transmitted to the child PowerLine module 31, which will convert the received analogue signal back to a digital signal. In other words, by means of a modulation of the analogue signal on the electrical line, it is possible to transmit an analogue signal representative of a series of data, exploiting an electrical line already present, and consequently avoiding the use of additional cables.

Advantageously, in the context of the present invention, disconnections/reconnections to/from the ATEX environment are simplified, as no two separate electrical cables are used, but a single electrical cable, to simultaneously provide the power supply and the transmission of digital command and control signals.

As PowerLine communication technology is known to a person skilled in the art, it will not be discussed further.

The system 1 further comprises a power supply module 32, configured to deliver direct current electrical power.

Furthermore, the system 1 comprises a processing unit 33, in signal communication with the child PowerLine module 31 which is electrically connected to the power supply module 32.

Such a processing unit 33 is configured to receive/transmit the digital signal from the child PowerLine module 31 and is configured to generate an actuation or control signal to the device arranged in an ATEX environment.

By way of example, the processing unit 33 comprises an Intel i5 fanless processor 331.

In an embodiment, the processing unit 33 further comprises a 256 GB Solid State Drive 332 (SSD) and an 8 GB Random Access Memory 333 (RAM).

The system 1 further comprises a command and control interface 41 electrically connected to the processing unit 33. The command and control interface 41 is configured to receive commands from a user.

It should be noted that, the system 1 of the present invention comprises a casing 34, arranged in an ATEX environment and compliant with the EN 60079 series. In particular, the casing 34 has a cavity, wherein one or more of the child PowerLine module 31, the power supply module 32 and the processing unit 33 and the command and control interface 41 are arranged in the cavity.

According to an embodiment, the casing 34 is made of metallic material and has a parallelepiped shape but clearly other shapes are conceivable.

The casing 34 comprises a plurality of walls, defining the cavity. In other words, the casing 34 defines a volume in which at least one of the child PowerLine module 31, the power supply module 32, the processing unit 33 and the command and control interface 41 are arranged.

Furthermore, in accordance with the system 1 of the present invention, the power supply module 32 and the child Powerline module 31 are electrically connected with said electrical network 21 by means of a single electrical cable Y.

Preferably, the power supply module 32 receives an alternating voltage at 230V in input from said electrical network 21 to convert it into a low direct current voltage, for example 12V or 24V, adapted to power the processing unit 33.

In the preferred form, the electrical cable Y has a first electrical end immovably connected to the power supply module 32 and to the child PowerLine module 31 and an opposite second electrical end provided with electrical terminals connectable to said electrical network 21, for example by means of a plug-in system of known type.

In an alternative embodiment, the first electrical end of the electrical cable Y is electrically connected to a connector 5. Said connector 5 is preferably provided with a mechanical block and an IP seal, in compliance with EN 60079 standards, so as to avoid intrusions by material coming from the outside, for example atmospheric or industrial dust.

Still preferably, the connector 5 is arranged inside the cavity of the casing 34.

It should be noted that the connector 5 is preferably protected by a case (not visible in the figures) such that, when the electrical cable Y is electrically connected to the connector 5, the user cannot access it when they are electrically connected.

According to a first embodiment, the system 1 comprises a single casing, wherein the power supply module 32, the child PowerLine module 31, the processing unit 33 and the command and control interface 41 are arranged in the cavity of the single casing.

According to a second embodiment, the system 1 comprises a first and a second casing 341, 342 wherein said power supply module 32 and said child PowerLine module 31 are arranged in the cavity of the first casing 341 and said processing unit 33, said command and control interface 41 are arranged in the cavity of the second casing 342.

In the preferred embodiment, the first and the second casing 341, 342 are made of metallic material.

According to a further aspect, the system 1 can comprise a WiFi module 334 configured to receive/send digital signals to/from the device arranged in an ATEX environment.

Preferably, the actuation signal is sent through the WI-FI module 334 from the processing unit 33 to the device. More preferably, the WI-FI module 334 comprises a plurality of antennas 3341 capable of transmitting radio waves on specific frequencies, detectable by the device.

It should be noted that, advantageously, the use of wireless technology further allows to simplify the electrical connections between the system 1 and the device and avoids wired connections.

In the first embodiment, the WI-FI module 334 is arranged in the cavity of the single casing.

In the second embodiment, the WI-FI module 334 is arranged in the cavity of the second casing 342.

Additionally, the system 1 can comprise a Bluetooth type communication module.

Always in the second embodiment, the system 1 comprises a plurality of shielded electrical cables 6, compliant with the EN 60079 series, equipped with shielded terminals, each shielded electrical cable being configured to electrically connect the processing unit 33 arranged in the second casing 342 with the power supply module 32 and with the child PowerLine module 31 arranged in the first of the first casing 341.

Preferably, the plurality of shielded cables 6 comprises a 230V power cable and an Ethernet cable, both of which are preferably provided with IP seal.

Preferably, the shielded terminals are electrically connected respectively to the processing unit 33 and the power supply module 32 and the child PowerLine module 31 in isolation, so as to prevent the presence of air near the terminals, in a potentially explosive environment.

Still preferably, the shielded electrical cable 6 comprises a covering sheath, extending along the entire length of the at least one shielded electrical cable 6, adapted to protect the at least one covering cable from vapours and/or corrosive substances within the ATEX environment.

According to an aspect, the casing 34 comprises a plurality of electrical connectors 51, for example an RJ45 type connector and one or more USB type connectors, suitable for communicating with devices or peripherals outside (not shown in the attached figures) the system 1.

In order to guarantee the plurality of electrical connections mentioned above, the system 1 comprises a plurality of electrical tracks X such as those dedicated to USB type or Ethernet type terminals, and at least one electrical track Z dedicated to the propagation of the direct current supply voltage.

In the preferred embodiment, the command and control interface 41 comprises a graphical interface 42, configured to display parameters relating to the device arranged in an ATEX environment. Preferably, the graphical interface 42 comprises an LCD display 421. In alternative embodiments, the system 1 envisages the use of an alternative display 421, such as a TFT display 421.

In the preferred form, the command and control interface 41, more preferably the graphical interface 42, comprises a protective glass 423 of type IK8.

In other words, the protective glass 423 is preferably a tempered glass, so as to increase the resistance thereof in the presence of mechanical stresses and/or thermal shocks.

Preferably, the system 1 further comprises an ON/OFF button 412 configured to turn on/off said graphical interface 42.

It should be noted that, in the preferred form, the system 1 comprises a first shielded electrical cable and a second shielded electrical cable, configured to electrically connect the processing unit 33 to the graphic interface 42 and to the ON/OFF button 412, respectively.

Preferably, the first electrical cable exploits a differential transmission system 1 according to the LVDS standard, so as to guarantee a high data transmission speed, while maintaining a low voltage.

Otherwise, the second electrical cable is preferably configured to provide a power supply signal, preferably of 5V, to the graphical interface 42 by means of the ON/OFF button.

According to an aspect, the command and control interface 41 comprises a touchscreen panel 422, superimposed on the graphical interface 42.

In other words, the touchscreen panel 422 is interposed between the graphical interface 42, more preferably the LCD display 421, and the protective glass 423.

Advantageously, this allows a more immediate and direct interaction between a user and the command and control interface 41.

According to an aspect, the ON/OFF button 412, as well as the touchscreen panel 422, are capacitive.

In the preferred embodiment, the system 1 comprises a third electrical cable configured to electrically connect the processing unit 33 to the touchscreen panel 422. Preferably, the third shielded electrical cable uses a USB communication standard. Preferably, the graphical interface 42 comprises a control module 4221 configured to ensure the data transmission between the touchscreen panel 422 and the processing unit 33.

According to an aspect, the command and control interface 41 also comprises a webcam 413 configured to acquire images of the ATEX environment. It should be noted that the presence of a webcam 413 allows to control the status of the ATEX environment, as well as the operation of the device therein.

In the preferred form of the invention, the system 1 comprises a fourth electrical cable, configured to electrically connect the processing unit 33 to the webcam 413.

Similar to the third electrical cable, the fourth shielded electrical cable uses a USB communication standard.

Preferably, the system comprises a backlighting module 4211, electrically connected to the processing unit 33 and to the display 421. If present, the system comprises a fifth electrical cable, configured to electrically connect the backlighting module 4211 to the display 421.

According to an aspect of the invention, one side of the at least one casing 34 serves as a support to the command and control interface 41.

Preferably, the first, second, third, fourth and fifth shielded electrical cables are arranged in the cavity of the at least one casing 34.

It should be noted that, in the second embodiment, the second casing 342 can be positioned remotely from the first casing 341. Thereby, compatibly with the length of the plurality of the aforementioned shielded electrical cables 6, the second casing 342 can be positioned in a different place in the ATEX environment with respect to the first casing 341.

Thereby, the command and control interface 41, arranged in the second casing 342, can be movable, and thus not be fixed, within the ATEX environment, for example if held in hand by a mobile user within such an environment.

According to an aspect, the system 1 comprises at least one speaker 35, for example two speakers, electrically connected to the processing unit 33. The at least one speaker 35 is configured to emit an audible sound signal, for example an alarm or notification signal to signal a status of the device, for example in the event of malfunction, actuation start or, alternatively, in the event of explosion risk.

## Claims

1. System (1) for monitoring a device arranged in an explosive hazard environment (ATEX) comprising:
- a network device (22) configured to send/receive a first digital signal,
- a mother PowerLine module (2) electrically connectable to an electrical network (21), and connected with said network device (22) to receive said first digital signal and convert it into an analogue electrical signal to be fed into said electrical network (21), wherein said network device (22), said mother Powerline module (2) and said electrical network (21) are arranged in an environment without an explosive hazard,
- a device arranged in an explosive hazard environment (ATEX) and configured to operate in such an explosive hazard environment (ATEX),
- a child PowerLine module (31), configured to receive/transmit the analogue electrical signal from said electrical and convert it into a second digital signal,
- a supply module (32), being configured to deliver direct current electrical power,
- a processing unit (33), in signal communication with the child PowerLine module (31) and electrically connected to the power supply module (32), the processing unit (33) being configured to receive/transmit the second digital signal and generate an actuation signal for said device arranged in an explosive hazard environment (ATEX),
- a command and control interface (41) electrically connected to the processing unit (33), the command and control interface (41) being configured to receive commands from a user.
**characterised in that**
- it comprises at least one casing (34), compliant with EN 60079, having a cavity, wherein one or more of said power supply module (32), said child PowerLine module (31), said processing unit (33) and said command and control interface (41) are arranged in the cavity of the at least one casing (34),
- the power supply module (32) and the child Powerline module (31) are electrically connected with said electrical network (21) by means of a single electrical cable (Y).

2. System (1) according to Claim 1, wherein said electrical cable (Y) has an electrical end immovably connected to the power supply module (32) and the child power line module (31) and an opposite end provided with electrical terminals connectable to said electrical network (21).

3. System (1), according to Claim 1, wherein said electrical cable (Y) has an electrical end, removably connected to a connector (5), and an opposite end provided with electrical terminals connectable to said electrical network (21), said connector (5) being provided with a mechanical block and an IP seal.

4. System according to any of the preceding claims, wherein the at least one casing (34) comprises a single casing wherein said supply module (32), said child PowerLine module (31), said processing unit (33), said command and control interface (41) are arranged in the cavity of the single casing.

5. System (1) according to Claim 4, comprising a WI-FI module (334) electrically connected with the processing unit (33) and configured to receive/send digital signals to/from the device arranged in an ATEX environment, said actuation signal being sent through said WI-FI module (334), the WI-FI module (334) being arranged in the cavity of the single casing.

6. System according to any of the preceding claims from 1 to 3, wherein the at least one casing (34) comprises a first and a second casing (341, 342) wherein said power supply module (32) and said child PowerLine module (31) are arranged in the cavity of the first casing (341) and said processing unit (33), said command and control interface (41) are arranged in the cavity of the second casing (342).

7. System (1) according to Claim 6, comprising a WI-FI module (334) electrically connected with the processing unit (33) and configured to receive/send digital signals to/from the device arranged in an ATEX environment, said actuation signal being sent through said WI-FI module (334), the WI-FI module (334) being arranged in the cavity of the second casing (342).

8. System according to Claim 6 or 7, comprising a plurality of shielded electrical cables (6), compliant with EN 60079 standards, equipped with shielded terminals, each shielded electrical cable being configured to electrically connect the processing unit (33) arranged in the second casing (342) with the power supply module (32) and with the child PowerLine module (31) arranged in the first casing (341).

9. System (1) according to any of the preceding claims, wherein the command and control interface (41) comprises:
- a graphical interface (42), electrically connected to the processing unit (33), the graphical interface (42) being configured to display the parameters relating to the device arranged in an ATEX environment,
- an ON/OFF button (412), electrically connected to the processing unit (33), the ON/OFF button (412) being configured to turn on/off said graphic interface (42).

10. System (1), according to any of the preceding claims, wherein the command and control interface (41) comprises a webcam (413), electrically connected to the processing unit (33) and configured to acquire images of the ATEX environment.

## Patentansprüche

1. System (1) zur Überwachung einer in einer explosionsgefährdeten Umgebung (ATEX) angeordneten Vorrichtung, umfassend:
- eine Netzwerkvorrichtung (22), die dafür ausgelegt ist, ein erstes digitales Signal zu senden/empfangen,
- ein Mother-PowerLine-Modul (2), das mit einem elektrischen Netz (21) elektrisch verbindbar ist und mit der Netzwerkvorrichtung (22) verbunden ist, um das erste digitale Signal zu empfangen und es in ein analoges elektrisches Signal umzuwandeln, das in das elektrische Netz (21) einzuspeisen ist, wobei die Netzwerkvorrichtung (22), das Mother-PowerLine-Modul (2) und das elektrische Netz (21) in einer Umgebung ohne Explosionsgefahr angeordnet sind,
- eine Vorrichtung, die in einer explosionsgefährdeten Umgebung (ATEX) angeordnet und dafür ausgelegt ist, in einer solchen explosionsgefährdeten Umgebung (ATEX) betrieben zu werden,
- ein Child-PowerLine-Modul (31), das dafür ausgelegt ist, das analoge elektrische Signal aus dem elektrischen [Netz] zu empfangen/übertragen und es in ein zweites digitales Signal umzuwandeln,
- ein Versorgungsmodul (32), das dafür ausgelegt ist, Gleichstromleistung abzugeben,
- eine Verarbeitungseinheit (33), die in Signalverbindung mit dem Child-PowerLine-Modul (31) steht und elektrisch mit dem Versorgungsmodul (32) verbunden ist, wobei die Verarbeitungseinheit (33) dafür ausgelegt ist, das zweite digitale Signal zu empfangen/übertragen und ein Betätigungssignal für die in einer explosionsgefährdeten Umgebung (ATEX) angeordnete Vorrichtung zu erzeugen,
- eine Befehls- und Steuerschnittstelle (41), die elektrisch mit der Verarbeitungseinheit (33) verbunden ist, wobei die Befehls- und Steuerschnittstelle (41) dafür ausgelegt ist, Befehle von einem Benutzer zu empfangen,
**dadurch gekennzeichnet, dass**
- es mindestens ein Gehäuse (34) umfasst, das der EN 60079 entspricht und einen Hohlraum aufweist, wobei eines oder mehrere von dem Versorgungsmodul (32), dem Child-PowerLine-Modul (31), der Verarbeitungseinheit (33) und der Befehls- und Steuerschnittstelle (41) in dem Hohlraum des mindestens einen Gehäuses (34) angeordnet sind,
- das Versorgungsmodul (32) und das Child-PowerLine-Modul (31) mittels eines einzelnen elektrischen Kabels (Y) elektrisch mit dem elektrischen Netz (21) verbunden sind.

2. System (1) nach Anspruch 1, wobei das elektrische Kabel (Y) ein elektrisches Ende aufweist, das unbeweglich mit dem Versorgungsmodul (32) und dem Child-PowerLine-Modul (31) verbunden ist, und ein gegenüberliegendes Ende aufweist, das mit elektrischen Anschlüssen versehen ist, die mit dem elektrischen Netz (21) verbindbar sind.

3. System (1) nach Anspruch 1, wobei das elektrische Kabel (Y) ein elektrisches Ende aufweist, das lösbar mit einem Verbinder (5) verbunden ist, und ein gegenüberliegendes Ende aufweist, das mit elektrischen Anschlüssen versehen ist, die mit dem elektrischen Netz (21) verbindbar sind, wobei der Verbinder (5) mit einer mechanischen Blockierung und einer IP-Dichtung versehen ist.

4. System nach einem der vorhergehenden Ansprüche, wobei das mindestens eine Gehäuse (34) ein einzelnes Gehäuse umfasst, wobei das Versorgungsmodul (32), das Child-PowerLine-Modul (31), die Verarbeitungseinheit (33) und die Befehls- und Steuerschnittstelle (41) in dem Hohlraum des einzelnen Gehäuses angeordnet sind.

5. System (1) nach Anspruch 4, umfassend ein Wi-Fi-Modul (334), das elektrisch mit der Verarbeitungseinheit (33) verbunden und dafür ausgelegt ist, digitale Signale zu/von der in einer ATEX-Umgebung angeordneten Vorrichtung zu empfangen/senden, wobei das Betätigungssignal über das Wi-Fi-Modul (334) gesendet wird, wobei das Wi-Fi-Modul (334) in dem Hohlraum des einzelnen Gehäuses angeordnet ist.

6. System nach einem der vorhergehenden Ansprüche 1 bis 3, wobei das mindestens eine Gehäuse (34) ein erstes und ein zweites Gehäuse (341, 342) umfasst, wobei das Versorgungsmodul (32) und das Child-PowerLine-Modul (31) in dem Hohlraum des ersten Gehäuses (341) angeordnet sind und die Verarbeitungseinheit (33) und die Befehls- und Steuerschnittstelle (41) in dem Hohlraum des zweiten Gehäuses (342) angeordnet sind.

7. System (1) nach Anspruch 6, umfassend ein Wi-Fi-Modul (334), das elektrisch mit der Verarbeitungseinheit (33) verbunden und dafür ausgelegt ist, digitale Signale zu/von der in einer ATEX-Umgebung angeordneten Vorrichtung zu empfangen/senden, wobei das Betätigungssignal über das Wi-Fi-Modul (334) gesendet wird, wobei das Wi-Fi-Modul (334) in dem Hohlraum des zweiten Gehäuses (342) angeordnet ist.

8. System nach Anspruch 6 oder 7, umfassend eine Mehrzahl von geschirmten elektrischen Kabeln (6), die den Normen der Reihe EN 60079 entsprechen und mit geschirmten Anschlüssen ausgestattet sind, wobei jedes geschirmte elektrische Kabel dafür ausgelegt ist, die in dem zweiten Gehäuse (342) angeordnete Verarbeitungseinheit (33) elektrisch mit dem Versorgungsmodul (32) und mit dem in dem ersten Gehäuse (341) angeordneten Child-PowerLine-Modul (31) zu verbinden.

9. System (1) nach einem der vorhergehenden Ansprüche, wobei die Befehls- und Steuerschnittstelle (41) umfasst:
- eine grafische Schnittstelle (42), die elektrisch mit der Verarbeitungseinheit (33) verbunden ist, wobei die grafische Schnittstelle (42) dafür ausgelegt ist, die Parameter bezüglich der in einer ATEX-Umgebung angeordneten Vorrichtung anzuzeigen,
- eine EIN/AUS-Taste (412), die elektrisch mit der Verarbeitungseinheit (33) verbunden ist, wobei die EIN/AUS-Taste (412) dafür ausgelegt ist, die grafische Schnittstelle (42) ein-/auszuschalten.

10. System (1) nach einem der vorhergehenden Ansprüche, wobei die Befehls- und Steuerschnittstelle (41) eine Webcam (413) umfasst, die elektrisch mit der Verarbeitungseinheit (33) verbunden und dafür ausgelegt ist, Bilder der ATEX-Umgebung zu erfassen.

## Revendications

1. Système (1) de surveillance d'un dispositif disposé dans un environnement à risque d'explosion (ATEX) comprenant :
- un dispositif de réseau (22) configuré pour envoyer/recevoir un premier signal numérique,
- un module PowerLine mère (2) pouvant être raccordé électriquement à un réseau électrique (21), et connecté audit dispositif de réseau (22) pour recevoir ledit premier signal numérique et le convertir en un signal électrique analogique à injecter dans ledit réseau électrique (21), dans lequel ledit dispositif de réseau (22), ledit module PowerLine mère (2) et ledit réseau électrique (21) sont disposés dans un environnement sans risque d'explosion,
- un dispositif disposé dans un environnement à risque d'explosion (ATEX) et configuré pour fonctionner dans un tel environnement à risque d'explosion (ATEX),
- un module PowerLine fille (31), configuré pour recevoir/émettre le signal électrique analogique provenant dudit réseau électrique et le convertir en un deuxième signal numérique,
- un module d'alimentation (32), configuré pour délivrer une puissance électrique en courant continu,
- une unité de traitement (33), en communication de signal avec le module PowerLine fille (31) et connectée électriquement au module d'alimentation (32), l'unité de traitement (33) étant configurée pour recevoir/émettre le deuxième signal numérique et générer un signal d'actionnement pour ledit dispositif disposé dans un environnement à risque d'explosion (ATEX),
- une interface de commande et de contrôle (41) connectée électriquement à l'unité de traitement (33), l'interface de commande et de contrôle (41) étant configurée pour recevoir des commandes d'un utilisateur,
**caractérisé en ce que**
- il comprend au moins un boîtier (34), conforme à la norme EN 60079, ayant une cavité, dans lequel un ou plusieurs parmi ledit module d'alimentation (32), ledit module PowerLine fille (31), ladite unité de traitement (33) et ladite interface de commande et de contrôle (41) sont disposés dans la cavité de l'au moins un boîtier (34),
- le module d'alimentation (32) et le module PowerLine fille (31) sont connectés électriquement audit réseau électrique (21) au moyen d'un unique câble électrique (Y).

2. Système (1) selon la revendication 1, dans lequel ledit câble électrique (Y) a une extrémité électrique connectée de manière inamovible au module d'alimentation (32) et au module PowerLine fille (31) et une extrémité opposée pourvue de bornes électriques pouvant être raccordées audit réseau électrique (21).

3. Système (1) selon la revendication 1, dans lequel ledit câble électrique (Y) a une extrémité électrique connectée de manière amovible à un connecteur (5), et une extrémité opposée pourvue de bornes électriques pouvant être raccordées audit réseau électrique (21), ledit connecteur (5) étant pourvu d'un verrouillage mécanique et d'un joint d'étanchéité IP.

4. Système selon l'une quelconque des revendications précédentes, dans lequel l'au moins un boîtier (34) comprend un boîtier unique dans lequel ledit module d'alimentation (32), ledit module PowerLine fille (31), ladite unité de traitement (33), ladite interface de commande et de contrôle (41) sont disposés dans la cavité du boîtier unique.

5. Système (1) selon la revendication 4, comprenant un module Wi-Fi (334) connecté électriquement à l'unité de traitement (33) et configuré pour recevoir/envoyer des signaux numériques vers/depuis le dispositif disposé dans un environnement ATEX, ledit signal d'actionnement étant envoyé par l'intermédiaire dudit module Wi-Fi (334), le module Wi-Fi (334) étant disposé dans la cavité du boîtier unique.

6. Système selon l'une quelconque des revendications précédentes de 1 à 3, dans lequel l'au moins un boîtier (34) comprend un premier et un deuxième boîtier (341, 342) dans lequel ledit module d'alimentation (32) et ledit module PowerLine fille (31) sont disposés dans la cavité du premier boîtier (341) et ladite unité de traitement (33), ladite interface de commande et de contrôle (41) sont disposées dans la cavité du deuxième boîtier (342).

7. Système (1) selon la revendication 6, comprenant un module Wi-Fi (334) connecté électriquement à l'unité de traitement (33) et configuré pour recevoir/envoyer des signaux numériques vers/depuis le dispositif disposé dans un environnement ATEX, ledit signal d'actionnement étant envoyé par l'intermédiaire dudit module Wi-Fi (334), le module Wi-Fi (334) étant disposé dans la cavité du deuxième boîtier (342).

8. Système selon la revendication 6 ou 7, comprenant une pluralité de câbles électriques blindés (6), conformes aux normes EN 60079, équipés de bornes blindées, chaque câble électrique blindé étant configuré pour connecter électriquement l'unité de traitement (33) disposée dans le deuxième boîtier (342) au module d'alimentation (32) et au module PowerLine fille (31) disposés dans le premier boîtier (341).

9. Système (1) selon l'une quelconque des revendications précédentes, dans lequel l'interface de commande et de contrôle (41) comprend :
- une interface graphique (42), connectée électriquement à l'unité de traitement (33), l'interface graphique (42) étant configurée pour afficher les paramètres relatifs au dispositif disposé dans un environnement ATEX,
- un bouton MARCHE/ARRÊT (412), connecté électriquement à l'unité de traitement (33), le bouton MARCHE/ARRÊT (412) étant configuré pour activer/désactiver ladite interface graphique (42).

10. Système (1) selon l'une quelconque des revendications précédentes, dans lequel l'interface de commande et de contrôle (41) comprend une webcam (413), connectée électriquement à l'unité de traitement (33) et configurée pour acquérir des images de l'environnement ATEX.
